# EUROPÄISCHE PATENTSCHRIFT

(11) **EP 1 138 016 B1**
(45) Veröffentlichungstag und Bekanntmachung des Hinweises auf die Patenterteilung: **31.07.2002**
(21) Anmeldenummer: 99957991.5
(22) Anmeldetag: 03.11.1999
(51) Int. Cl.: G06K 19/06, G06K 1/12, G08B 13/24

(54) **MARKIERUNGSEINRICHTUNG**
MARKING DEVICE
EQUIPEMENT DE MARQUAGE

(30) Priorität: 13.11.1998 DE 19852368
(43) Veröffentlichungstag der Anmeldung: 04.10.2001
(73) Patentinhaber: Forschungszentrum Jülich GmbH, 52425 Jülich (DE)
(72) Erfinder: EBERHARDT, Wolfgang, D-52428 Jülich (DE); MORENZIN, Jan, D-53773 Hennef (DE)
(74) Vertreter: Paul, Dieter-Alfred, Dipl.-Ing.
(86) Internationale Anmeldenummer: EP9908433
(87) Internationale Veröffentlichungsnummer: WO0030029

(56) Entgegenhaltungen:
- EP-A- 0 612 066
- EP-A- 0 650 142
- EP-A- 0 718 824
- US-A- 5 538 803

## Beschreibung

Die Erfindung betrifft eine Markierungseinrichtung für die Anbringung an Objekten, mit einer magnetischen Kodierung, die Bereiche unterschiedlicher Magnetisierung aufweist.

Für die Markierung und damit individuelle Zuordnung und Sicherung von Kreditkarten, Zugangskarten, elektronischen Schlüsseln oder dergleichen werden vielfach magnetische Kodierungen verwendet, und zwar häufig in Form eines sogenannten Magnetstreifens. Für die Kodierung wird eine permanentmagnetische Schicht selektiv, d.h. bereichsweise aufmagnetisiert. Mit entsprechenden Sensoren kann die magnetische Signatur bzw. Kodierung erfaßt und dann entsprechend dem jeweiligen Zweck verarbeitet werden.

Die bekannten Markierungseinrichtungen auf der Basis einer magnetischen Kodierung haben den Nachteil, daß sie relativ einfach nachgestellt werden können und deshalb nur einen geringen Schutz gegen Fälschungen bieten. Außerdem sind solche Markierungseinrichtungen empfindlich gegen äußere Magnetfelder und neigen auch dazu, daß sich die Magnetisierung bei längerer Lagerung und unter äußeren Einflüssen (Magnetfelder, Temperatur etc.) abschwächt oder sogar vollständig verlorengeht.

In der EP 0718 824 A1 ist ein Datenspeichermedium offenbart, das auf einem Träger eine mehrlagige schichtstruktur aufweist, die als Kern ein Dreischichtsystem aus zwei ferromagnetischen Schichten und einer dazwischen angeordneten nichtmagnetischen Zwischenschicht enthält. Die Zwischenschicht erstreckt sich über das ganze Speichermedium und hat eine gleichmäßige Dicke, die so bemessen ist, daß sich eine antiparallele Kopplung der ferromagnetischen Schichten ergibt. Dadurch wird ein unterschiedliches Schaltverhalten der beiden Schichten bei Beaufschlagung mit einem äußeren Magnetfeld erreicht. Es lassen sich zwei unterschiedlich stabile Zustände erzeugen, wobei die ferromagnetischen Schichten je nach Stärke des Magnetfeldes entweder parallel oder antiparallel stehen. Während des Schreibprozesses wird durch ein äußeres Magnetfeld bereichsweise entsprechend der binären Ausgangsinformation ein Muster dieser beiden Zustände erzeugt.

In der EP 0 612 066 A1 ist eine magneto-optische Speicherscheibe offenbart, in die während der Herstellung eine Information eingeschrieben werden kann. Die Scheibe enthält im wesentlichen zwei magnetische Schichten, deren Koerzivität und Curie-Temperaturen sich aufgrund verschiedener Materialien unterscheiden. Die Strukturierung geschieht durch die Dicke der zweiten Schicht. Zwischen den beiden Schichten existiert eine Austauschkopplung, die von der Dicke der zweiten Schicht abhängt. Die Ausbildung von lokal antiparallel orientierten Magnetisierungen der beiden Schichten ist eine Folge einer selektiven Ummagnetisierung einzelner Bereiche der zweiten Schicht. Dabei geschieht das Einstellen und die Strukturierung der beiden Schichten durch die Variation der Materialzusammensetzung, um geeignete Schaltfelder für den Umklapp-Prozeß zu erhalten. Es existiert zwischen den beiden Schichten lokal eine magnetische Wand, die keine Zwischenschicht darstellt.

In der EP 0 650 142 A1 ist ein magnetisches Medium zur Datenspeicherung beschrieben, welches ein vordefiniertes magnetisches Muster aufweist, das durch räumliche Strukturierung einer magnetischen Schicht erzielt wird. Diese Schicht enthält magnetische Pigmente, die in einen polymeren Binder eingebettet sind. Während des Herstellungsprozesses kann die lokale Konzentration und/oder Ausrichtung der magnetischen Pigmente vor dem Aushärten des Binders beeinflußt werden. Durch Trocknung des Binders wird diese räumliche Verteilung eingefroren.

Der Erfindung liegt die Aufgabe zugrunde, eine Markierungseinrichtung der eingangs genannten Art so zu gestalten, daß sie einen hohen Schutz gegen Fälschung bietet, unempfindlich gegen äußere Magnetfelder ist und daß die Kodierung nicht verlorengehen kann.

Diese Aufgabe wird erfindungsgemäß dadurch gelöst, daß die Kodierung wenigstens eine magnetische Grundschicht und wenigstens eine magnetische Kodierungsschicht sowie eine zwischen der Grundschicht und der Kodierungsschicht angeordnete, nicht magnetische Zwischenschicht aufweist, wobei die Zwischenschicht in Teilbereichen der Kodierung Grundschicht und Kodierungsschicht durch ihre Dicke derart beabstandet, daß sich dort eine nichtparallele oder antiparallele Kopplung ergibt.

Grundgedanke der Erfindung ist es somit, für die Kodierung zwei dünne magnetische Schichten zu verwenden und dabei von dem Effekt der magnetischen Zwischenschichtkopplung Gebrauch zu machen. Dieser Effekt ist an sich bekannt (P. Grünberg et al., Layered Magnetic Structures: Evidence for Antiferromagnetic Coupling of Fe Layers across Cr Interlayers, Physical Review Letters, Volume 57, Number 19, 1986, S.2442 bis 2445) und wird vornehmlich für Magnetfeldsensoren verwendet (US-A-5,159,513; EP-B-0 346 817) oder auch für magnetische Aufzeichnungsköpfe, Übertrager und Abschirmungen (DE-OS 28 27 429). Mittels der Zwischenschicht z.B. aus Cu oder Cr kann bei Verwendung üblicher magnetischer Materialien für Grundund Kodierungsschicht, wie beispielsweise Fe, Co, Ni oder dergleichen, eine nicht parallele oder antiparallele Ausrichtung der Magnetisierung bewirkt werden. Vorzugsweise sollte die Zwischenschicht eine solche Dicke aufweisen, daß eine antiparallele Kopplung erzeugt wird, da hierdurch die magnetische Strukturierung der Kodierung besonders deutlich ist. Ferner sollte die Zwischenschicht nur dort vorgesehen sein, wo eine nicht- oder antiparallele Kopplung bewirkt werden soll. Auch in diesem Fall entstehen besonders deutliche magnetische Strukturierungen der Kodierung.

Eine auf dem Effekt der Zwischenschichtkopplung beruhende Markierungseinrichtung hat den Vorteil eines sehr charakteristischen, von den üblichen magnetischen Markierungen abweichenden Verhaltens bei Anlegen eines externen Magnetfeldes. Ist das äußere Magnetfeld groß genug, so bricht die nicht- oder antiparallele Kopplung auf, was zu einer Änderung der Magnetisierung der entsprechenden räumlichen Bereiche führt. Wird das äußere Magnetfeld entfernt, stellt sich die ursprüngliche Magnetisierung mit nichtparalleler oder antiparalleler Kopplung wieder ein. Eine herkömmliche magnetische Kodierung würde bei Aufmagnetisierung bis zur Sättigung die eingebrachte Information verlieren, da im remanenten Zustand die einzelnen Bereiche die durch das äußere Magnetfeld vorgegebene Magnetisierungsrichtung behalten. Dieses charakteristische Verhalten der nicht- oder antiparallel koppelnden Bereiche bietet den Vorteil eines mit der Herstellung der Markierung vorgegebenen räumlich strukturierten magnetischen Musters zur Informationsspeicherung. Das magnetische Verhalten dieses Musters in der Sättigung und in Remanenz läßt sich nicht durch rein parallel koppelnde magnetische Kodierungen nachstellen und bietet damit den genannten Schutz gegen Fälschung.

Der oben beschriebene Effekt kann auch dazu genutzt werden eine aufgrund längerer Lagerzeit abgeschwächte oder sogar verlorengegangene magnetische Kodierung zu reaktivieren, indem die Sicherheitseinrichtung einem äußeren Magnetfeld ausgesetzt wird. Dies eröffnet die Möglichkeit, die Markierungseinrichtung auch dort zu verwenden, wo bisher magnetische Kodierungen nicht eingesetzt worden sind, z.B. wo nur selten eine Identifizierung notwendig ist wie bei Banknoten, Fahrgestellen von Kraftfahrzeugen, Schmuckgegenstände oder dergleichen. Da die Kodierung mit Magnetfeldern nicht zerstört und zudem auch jederzeit reaktiviert werden kann, gibt es keine Grenzen für die Verwendbarkeit der erfindungsgemäßen Markierungseinrichtung.

Die erfindungsgemäße Markierungseinrichtung bietet zudem den Vorteil, daß sie mit den herkömmlichen Lesegeräten für magnetische Datenträger kompatibel ist, beispielsweise AMR-oder GMR-Sensoren oder magneto-optische Lesegeräte wie magneto-optische Kerrmikroskope.

Alternativ kann die Aufgabe auch dadurch gelöst werden, daß die Kodierung wenigstens eine magnetische Grundschicht und wenigstens eine magnetische Kodierungsschicht aufweist, die direkt an der Grundschicht anliegt und auf Teilbereiche der Grundschicht beschränkt ist, wobei die Kodierungsschicht aus einem Material besteht, das nichtparallel oder antiparallel koppelt. Solche Materialien sind beispielsweise Cr als Monolage auf Fe oder Seltenerdmetalle wie Gadolinium oder deren Legierungen. Bei diesen Materialien stellt sich die nicht- oder antiparallele Kopplung schon bei direkter Anlage an der Grundschicht ein und führt dort lokal zu einer Änderung des magnetischen Signals. Dies kehrt sich unter Einwirkung dort, wo die Kodierungsschicht aus dem vorgenannten Material vorhanden ist, erhöht sich die Feldstärke, so daß auch dann eine bestimmte Magnetisierungsstruktur entsteht, die durch entsprechende Sensoren erfaßt werden kann. Nach Entfernen des äußeren Magnetfeldes stellt sich wieder die ursprüngliche Struktur ein.

Zur Erzeugung der Bereiche nichtparalleler oder antiparalleler magnetischer Kopplung reicht es aus, wenn die Kodierungsschicht nur Bereiche der Grundschicht abdeckt. Dies gilt insbesondere für den Fall, daß die Kodierungsschicht aus einem Material besteht, das schon bei direkter Anlage an der Grundschicht nichtparallel oder antiparallel koppelt. Eine bessere Strukturierung der Kodierung wird jedoch dann erreicht, wenn die Grundschicht und die Kodierungsschicht so zusammenwirken, daß sich Bereiche mit nichtparalleler oder antiparalleler Kopplung und Bereiche mit paralleler Kopplung ergeben. Dies wird vor allem dadurch erreicht, daß die Zwischenschicht auf die Bereiche beschränkt wird, wo eine nichtparallele oder antiparallele Kopplung erzeugt werden soll.

Die Anordnung und Ausbildung von Grundschicht und Kodierungsschicht kann so getroffen sein, daß bei Anlegen eines äußeren magnetischen Sättigungsfeldes eine räumlich ungleichmäßige Magnetisierung vorhanden ist, die sich von der räumlichen Struktur der Magnetisierung ohne äußeres Magnetfeld unterscheidet. Beide Magnetisierungsausprägungen können dann zu Identifikationszwecken bei der Detektion genutzt werden.

Zweckmäßig ist es aber auch, wenn die Grundschicht und die Kodierungsschicht derart ausgebildet sind, daß sie in einem Sättigungsmagnetfeld über die Fläche eine gleichmäßige Magnetisierung aufweisen. In einem externen Magnetfeld verschwindet dann die Kodierung. Dies kann dazu genutzt werden, vor der Detektierung eine Magnetisierung bis zur Sättigungsgrenze durchzuführen. Hierdurch werden Kodierungen ausgesondert, die mit bekannten Verfahren hergestellt worden sind, denn nach der Durchmagnetisierung ist deren Kodierung zerstört und kann nicht mehr reaktiviert und detektiert werden. Im Unterschied dazu stellt sich bei der Markierungseinrichtung gemäß der vorliegenden Erfindung nach Wegnahme des Magnetfeldes wieder die ursprüngliche Kodierung ein und kann detektiert werden. Die vorbeschriebene Eigenschaft kann am einfachsten dadurch verwirklicht werden, daß Grundschicht und Kodierungsschicht konstante Dicken aufweisen und jeweils durchgängig aus einem einzigen Material bestehen. Dabei wird die deutlichste Strukturierung dann erreicht, wenn Grundschicht und Kodierungsschicht die gleiche Magnetisierung haben und die gegebenenfalls vorhandene Zwischenschicht eine solche Dicke hat, daß die Kodierungsschicht im Bereich der Zwischenschicht eine vollständige Kompensation der Magnetisierung der Grundschicht bewirkt. In den übrigen Bereichen wird dagegen die Magnetisierung aufgrund paralleler Kopplung verstärkt.

Der Grundgedanke der Erfindung läßt sich in variierter Form auch dahingehend verwirklichen, daß die Grundschicht und/oder die Kodierungsschicht und/oder - soweit vorhanden - die Zwischenschicht Bereiche unterschiedlichen Materials und/oder unterschiedlicher Dicke aufweisen. Hierdurch lassen sich Kodierungen von nahezu beliebiger Komplexität herstellen, d.h. es können Bereiche mit beliebig vielen unterschiedlichen Magnetisierungen verwirklicht und damit auch abgestufte werte gespeichert werden. Dies wiederum hat eine hohe Sicherheit und einen wirksamen Schutz gegen Fälschung zur Folge.

Es versteht sich, daß sich der Grundgedanke der Erfindung nicht nur mit einer, sondern auch mehreren, übereinander gelagerten Kodierungsschichten verwirklichen läßt. Hierdurch kann ebenfalls eine hohe Komplexität der Kodierung erzielt werden. Dabei können auch Kodierungsschichten unterschiedlichen Materials und unterschiedlicher Dicke verwendet werden. In gleicher Weise kann die magnetische Kopplung der Kodierungsschicht(en) auch durch die jeweilige Wahl des Materials und der Dicke der Zwischenschicht beeinflußt werden.

In der Zeichnung ist die Erfindung anhand eines Ausführungsbeispiels näher veranschaulicht. Es zeigen:
- Figur 1: einen Querschnitt durch eine Markierungseinrichtung mit Darstellung der Magnetisierungsstruktur;
- Figur 2: einen Querschnitt durch die Markierungseinrichtung gemäß Figur 1 bei Magnetisierung im Sättigungsbereich;
- Figur 3: eine Graphik, die die Abhängigkeit der antiparallelen Kopplungsstärke von der Schichtdicke der Zwischenschicht verdeutlicht.

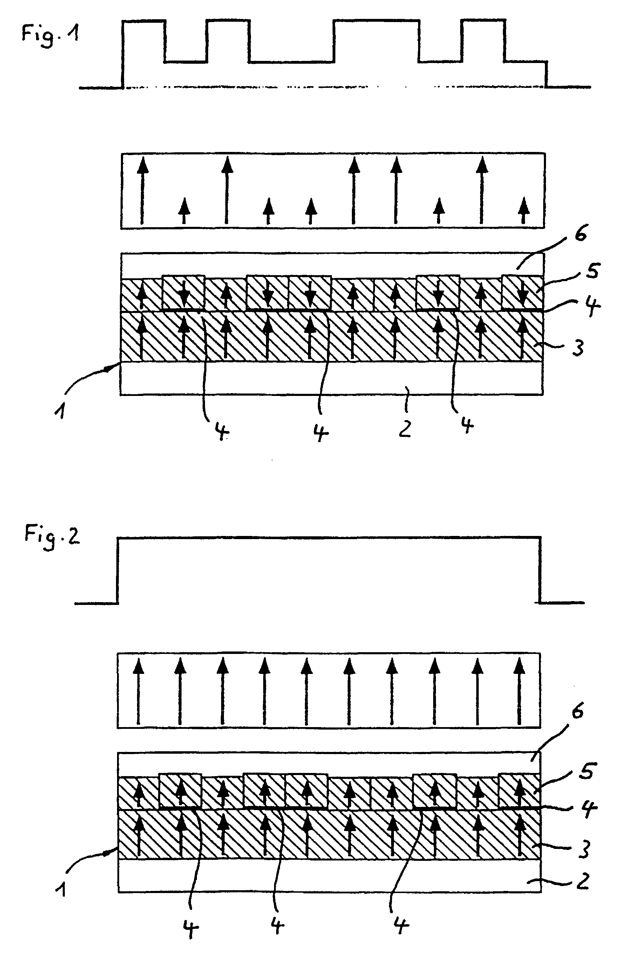

Die in den Figuren 1 und 2 dargestellte Markierungseinrichtung 1 weist eine Trägerschicht 2 beispielsweise aus Si/SiO₂ auf. Sie kann eine beliebige, für den jeweiligen Einsatzzweck geeignete Dicke aufweisen. Auf die Trägerschicht 2 ist eine permanentmagnetische Grundschicht 3, beispielsweise aus Kobalt in einer Dicke von 40 nm, aufgebracht. Auf diese Grundschicht 3 ist selektiv, d.h. bereichsweise eine Zwischenschicht 4 aufgebracht, beispielsweise aus Kupfer in einer Dicke von 0,8 nm. Auf die Bereiche ohne und mit zwischenschicht 4 ist dann eine Kodierungsschicht 5 z.B. aus Co in einer Dicke von etwa 25 nm aufgebracht, welche obenseitig mit einer Schutzschicht 6, beispielsweise einer 50 nm dicken Cu-Schicht oder einem polymeren Schutzlack wie z.B. 10 pm PMMA, beschichtet ist.

Durch die Pfeile auf Grundschicht 3 und Kodierungsschicht 5 sind Richtung und Stärke der Magnetisierung qualitativ verdeutlicht. Allerdings ist die Richtung der Magnetisierung aus darstellungstechnischen Gründen um 90° verdreht gezeigt. Bei der hier beschriebenen Materialkombination Co/Cu/Co - wie auch bei den meisten anderen in Frage kommenden Materialkombinationen - liegen die Richtungen der Magnetisierung in den Ebenen von Grundschicht 3 und Kodierungsschicht 5, und zwar teilweise parallel und teilweise antiparallel.

In Figur 1 ist zu erkennen, daß die Grundschicht 3 gleichmäßig über die Fläche magnetisiert ist. Auch die Kodierungsschicht 5 ist magnetisiert, wenn auch die Feldstärke aufgrund der geringeren Dicke kleiner ist als in der Grundschicht 3. In den Bereichen, wo keine Zwischenschicht 4 vorhanden ist, ist die Magnetisierung in der Kodierungsschicht 5 parallel und gleichgerichtet. Dort, wo eine Zwischenschicht 4 vorhanden ist, wird eine antiparallele Kopplung der Magnetisierung bewirkt, d.h. die Magnetisierung von Grundschicht 3 und Kodierungsschicht 5 ist entgegengesetzt gerichtet und damit antiparallel. Oberhalb der Markierungseinrichtung 1 ist in einem Kasten die Stärke des resultierenden Magnetfeldes durch Pfeile und darüber das entsprechende Auslesesignal in einem Kurvenzug dargestellt. Es ist zu erkennen, daß die Magnetisierung der Grundschicht 3 in den Bereichen, wo keine Zwischenschicht 4 vorhanden ist, durch die Kodierungsschicht 5 verstärkt wird. Dort, wo eine Zwischenschicht 4 aufgebracht ist, wird jedoch das resultierende Magnetfeld der gesamten Schichtenanordnung aufgrund antiparalleler Kopplung geschwächt. Hierdurch entsteht eine Kodierungsstruktur mit sehr unterschiedlichen resultierenden Feldstärken an der Oberfläche, die mit Hilfe von geeigneten Sensoren detektiert und analysiert werden kann.

Figur 2 zeigt den Zustand der Markierungseinrichtung 1 in einem externen Magnetfeld im Sättigungsbereich. Es ist zu erkennen, daß die antiparallele Kopplung aufgebrochen ist, so daß jetzt auch diejenigen Bereiche der Kodierungsschicht 5, die durch eine Zwischenschicht 4 von der Grundschicht 3 getrennt sind, wie die benachbarten Bereiche ohne Trennung durch eine Zwischenschicht 4 parallel und gleichgerichtet magnetisiert sind. Damit sind alle Bereiche gleichmäßig magnetisiert, d.h. die Variation des magnetischen Signals verschwindet. Eine Kodierung ist nicht mehr vorhanden. Nach Entfernung des äußeren Magnetfeldes und damit in Remanenz stellt sich jedoch wieder spontan der aus Figur 1 ersichtliche Zustand mit paralleler und antiparalleler Kopplung ein. Damit kann die Markierungseinrichtung 1 von anderen Markierungseinrichtungen unterschieden werden, die mit konventionellen Magnetisierungstechniken hergestellt sind und bei denen die Kodierung durch Anlegen eines externen Magnetfeldes gelöscht würde.

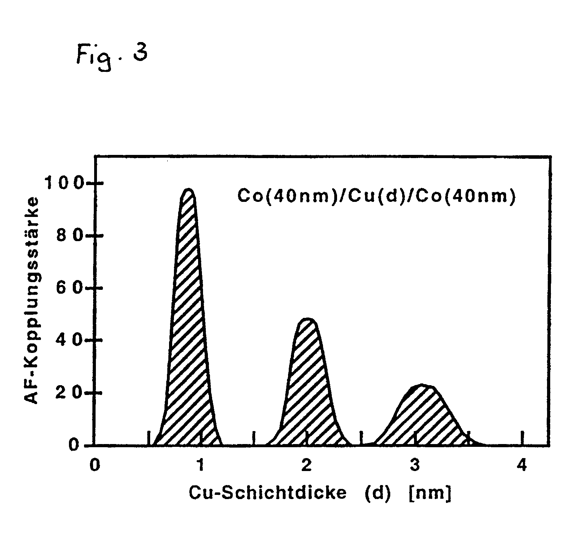

In der Graphik gemäß Figur 3 ist die Dicke der Zwischenschicht 4 auf der Abszisse und die antiferromagnetische Kopplungsstärke auf der Ordinate aufgetragen, und zwar für ein Beispiel, bei dem Grundschicht 3 und Zwischenschicht 4 aus Kobalt bestehen und jeweils in einer Dicke von 40 nm vorliegen. Es ist zu erkennen, daß die Stärke der antiferromagnetischen Kopplungsstärke mit der Dicke der Zwischenschicht 4 variiert. Die höchste Kopplungsstärke wird bei ca. 0,8 nm erreicht. Zwischen den Extrema gibt es Bereiche, in denen keine antiparallele Kopplung auftritt, sondern eine Kopplung um weniger als 180°, z.B. um 90° bis hin zu einer parallelen ferromagnetischen Kopplung. Auch diese Bereiche können dazu benutzt werden, eine gewünschte Magnetisierungs- und damit Kodierungsstruktur mit hoher Komplexität zu erhalten, so daß dann nicht nur - wie bei dem Beispiel gemäß Figur 1 - zwei unterschiedliche Gesamtmagnetisierungen vorliegen, sondern eine Mehr- oder Vielzahl verschiedener Magnetisierungen.

## Patentansprüche

1. Markierungseinrichtung (1) für die Anbringung an Objekten, mit einer magnetischen Kodierung, die Bereiche unterschiedlicher Magnetisierung aufweist, **dadurch gekennzeichnet, daß** die Kodierung wenigstens eine magnetische Grundschicht (3) und wenigstens eine magnetische Kodierungsschicht (5) sowie eine zwischen der Grundschicht (3) und der Kodierungsschicht (5) angeordnete, nicht magnetische Zwischenschicht (4) aufweist, wobei die Zwischenschicht (4) in Teilbereichen der Kodierung Grundschicht (3) und Kodierungsschicht (5) durch ihre Dicke derart beabstandet, daß sich dort eine nichtparallele oder antiparallele Kopplung ergibt.

2. Markierungseinrichtung nach Anspruch 1, **dadurch gekennzeichnet, daß** die Zwischenschicht (4) auf die Bereiche nichtparalleler oder antiparalleler Kopplung beschränkt ist.

3. Markierungseinrichtung nach Anspruch 1 oder 2, **dadurch gekennzeichnet, daß** die Kodierungsschicht (5) nur Teilbereiche der Grundschicht (3) abdeckt.

4. Markierungseinrichtung für die Anbringung an Objekten, mit einer magnetischen Kodierung, die Bereiche unterschiedlicher Magnetisierung aufweist, **dadurch gekennzeichnet, daß** die Kodierung wenigstens eine magnetische Grundschicht (3) und wenigstens eine magnetische Kodierungsschicht (5) aufweist, die direkt an der Grundschicht (3) anliegt und auf Teilbereiche der Grundschicht (3) beschränkt ist, wobei die Kodierungsschicht aus einem Material besteht, das nichtparallel oder antiparallel koppelt.

5. Markierungseinrichtung nach einem der Ansprüche 1 bis 4, **dadurch gekennzeichnet, daß** die Grundschicht (3) und die Kodierungsschicht (5) so zusammenwirken, daß sich Bereiche mit nichtparalleler oder antiparalleler Kopplung und Bereiche mit paralleler Kopplung ergeben.

6. Markierungseinrichtung nach einem der Ansprüche 1 bis 5, **dadurch gekennzeichnet, daß** Grundschicht (3) und Kodierungsschicht (5) derart ausgebildet sind, daß bei Anlegen eines äußeren magnetischen Sättigungsfeldes eine räumlich ungleichmäßige Magnetisierung vorhanden ist, die sich von der räumlichen Struktur der Magnetisierung ohne äußeres Magnetfeld unterscheidet.

7. Markierungseinrichtung nach Anspruch 5, **dadurch gekennzeichnet, daß** Grundschicht (3) und Kodierungsschicht (5) derart ausgebildet sind, daß in einem äußeren Magnetfeld über die Fläche eine gleichmäßige Magnetisierung vorhanden ist.

8. Markierungseinrichtung nach Anspruch7, **dadurch gekennzeichnet, daß** Grundschicht (3) und Kodierungsschicht (5) konstante Dicken aufweisen und jeweils durchgängig aus einem einzigen Material bestehen.

9. Markierungseinrichtung nach einem der Ansprüche 1 bis 8, **dadurch gekennzeichnet, daß** Grundschicht (3) und/oder die Kodierungsschicht (5) und/oder - soweit vorhanden - die Zwischenschicht (4) unterschiedlichen Materials sind und/oder unterschiedliche Dicke aufweisen.

10. Markierungseinrichtung nach einem der Ansprüche 1 bis 9, **dadurch gekennzeichnet, daß** mehrere Kodierungsschichten vorgesehen sind, welche so mit der Grundschicht (3) zusammenwirken, daß sich Bereiche nichtparalleler oder antiparalleler Kopplung ergeben.

## Claims

1. A marking device (1) for application to objects with a magnetic coding which has areas of different magnetizations, **characterized in that** the coding has at least one magnetic base layer (3) and at least one magnetic coding layer (5) and between the base layer (3) and the coding layer (5) an intermediate layer (4) is provided, wherein the intermediate layer (4) keeps distance by its thickness between base layer (3) and coding layer (5) in certain areas of the coding so that there are nonparallel or antiparallel magnetic couplings.

2. The marking device according to claim 1, **characterized in that** the intermediate layer is provided in the regions of nonparallel or antiparallel couplings.

3. The marking device according to claim 1 or 2, **characterized in that** the coding layer (5) covers only regions of the base layer (3).

4. A marking device (1) for application to objects with a magnetic coding which has areas of different magnetizations, **characterized in that** the coding has at least one magnetic base layer (3) and at least one magnetic coding layer (5) resting against the base layer (3) and limited to certain areas of the base layer (3), wherein the coding layer is comprised of a material that couples nonparallel or antiparallel.

5. The marking device according to one of claims 1 to 4, **characterized in that** the base layer (3) and the coding layer (5) so interact that regions with nonparallel or antiparallel couplings and regions with parallel couplings result.

6. The marking device according to one of claims 1 to 5, **characterized in that** the base layer (3) and the coding layer (5) are so configured that upon application of external magnetic saturation field, a spatially nonuniform magnetization is provided which differs from the spatial structure of the magnetization without the external magnetic field.

7. The marking device according to claim 5, **characterized in that** the base layer (3) and the coding layer (5) are so configured that a uniform magnetization is provided in an external magnetic field over the area.

8. The marking device according to claim 7, **characterized in that** the base layer (3) and the coding layer (5) have constant thicknesses and each is composed of a single material throughout.

9. The marking device according to one of claims 1 to 8, **characterized in that** the base layer (3) and/or the coding layer (5) and/or the intermediate layer (4) to the extent that it is provided, are composed of different materials and/or have different thicknesses.

10. The marking device according to claims 1 to 9, **characterized in that** a plurality of coding layers are provided which so interact with the base layer (3) that there are regions of nonparallel or antiparallel coupling.

## Revendications

1. Dispositif de marquage (1) destiné à l'application sur des objets, avec un codage magnétique, qui présente des zones d'aimantation différente, **caractérisé en ce que** le codage présente au moins une couche magnétique de base (3) et au moins une couche magnétique de codage (5) ainsi qu'une couche non magnétique intermédiaire (4) disposée entre la couche de base (3) et la couche de codage (5), la couche intermédiaire (4) éloignant, dans des zones partielles du codage, la couche de base (3) de la couche de codage (5) par son épaisseur de telle sorte que le résultat y est un couplage non parallèle ou antiparallèle.

2. Dispositif de marquage selon la revendication 1, **caractérisé en ce que** la couche intermédiaire (4) se limite aux zones de couplage non parallèle ou antiparallèle.

3. Dispositif de marquage selon la revendication 1 ou 2, **caractérisé en ce que** la couche de codage (5) recouvre uniquement des zones partielles de la couche de base (3).

4. Dispositif de marquage destiné à l'application sur des objets, avec un codage magnétique, présentant des zones d'aimantation différente, **caractérisé en ce que** le codage présente au moins une couche magnétique de base (3) et au moins une couche magnétique de codage (5) qui est directement adjacente à la couche de base (3) et se limite à des zones partielles de la couche de base (3), la couche de codage étant composée d'un matériau qui assure un couplage non parallèle ou antiparallèle.

5. Dispositif de marquage selon l'une quelconque des revendications 1 à 4, **caractérisé en ce que** la couche de base (3) et la couche de codage (5) coopèrent de telle sorte qu'il en résulte des zones de couplage non parallèle ou antiparallèle et des zones de couplage parallèle.

6. Dispositif de marquage selon l'une quelconque des revendications 1 à 5, **caractérisé en ce que** la couche de base (3) et la couche de codage (5) sont réalisées de telle sorte que, lorsqu'un champ de saturation magnétique extérieur est appliqué, il existe une aimantation irrégulière dans l'espace qui se distingue de la structure spatiale de l'aimantation sans champ magnétique extérieur.

7. Dispositif de marquage selon la revendication 5, **caractérisé en ce que** la couche de base (3) et la couche de codage (5) sont réalisées de telle sorte que dans un champ magnétique extérieur, il existe une aimantation régulière sur la surface.

8. Dispositif de marquage selon la revendication 7, **caractérisé en ce que** la couche de base (3) et la couche de codage (5) présentent des épaisseurs constantes et se composent respectivement en continu d'un seul matériau.

9. Dispositif de marquage selon l'une quelconque des revendications 1 à 8, **caractérisé en ce que** la couche de base (3) et/ou la couche de codage (5) et/ou la couche intermédiaire (4) - pour autant qu'elle est présente - se composent de matériaux différents et/ou présentent une épaisseur différente.

10. Dispositif de marquage selon l'une quelconque des revendications 1 à 9, **caractérisé en ce que** plusieurs couches de codage sont prévues qui coopèrent avec la couche de base (3) de telle sorte qu'il en résulte des zones de couplage non parallèle ou antiparallèle.
